# EUROPEAN PATENT SPECIFICATION

(11) **EP 1 126 111 B1**
(45) Date of publication and mention of the grant of the patent: **26.07.2006**
(21) Application number: 01102887.5
(22) Date of filing: 15.02.2001
(51) Int. Cl.: E05C 17/20

(54) **Releasable automotive door stop**
Lösbarer Türfeststeller für Kraftfahrzeuge
Arrêt de porte détachable pour véhicule automobile

(30) Priority: 15.02.2000 CA 2298853
(43) Date of publication of application: 22.08.2001
(73) Proprietor: MULTIMATIC INC., Markham, Ontario L3R 5E5 (CA); FORD MOTOR COMPANY, Dearborne, Michigan 48126 (US)
(72) Inventor: Ng, Bill Chean Wang, Newmarket, Ontario L3X 2H7 (CA); Gruber, Rudolf, Uxbridge, Ontario L9P 1R4 (CA); Grandinett, David H., Livonia, MI 48154 (US)
(74) Representative: Maiwald Patentanwalts GmbH

(56) References cited:
- EP-A- 0 216 689
- FR-A- 2 721 649
- GB-A- 1 255 199
- US-A- 5 173 991
- US-A- 5 862 570

## Description

### FIELD OF THE INVENTION

This invention relates to a mechanical device capable of positively stopping an automotive door from rotation at a predetermined position and then facilitating simple single-handed release to allow further rotation when desired.

### BACKGROUND TO THE INVENTION

Commercial vans utilize cargo loading doors that are required to open to higher angles than other automotive closure panels. These doors are regularly configured with a motion range of 180 degrees and in some cases up to 270 degrees in comparison to standard automotive passenger doors, which utilizes no more than 90 degrees of rotation. Such a typical door stopping device adapted to arrest a door at a motion range of about 180° is disclosed in EP 0 216 689. Said door arresting device comprises an arm which is guided by a roller assembly consisting of two rollers, wherein one of said rollers is adapted to engage a recess in said arm to keep the door to be arrested in an open position. However, for proper functioning of said device, the roller assembly design is very complex and complicated; in particular at least one of said rollers must be spring-mounted in order to lock into the recess of the arm. As with other automotive closure applications, it is desirable to check the door at a number of predetermined open positions with a predetermined force to assure convenient and safe ingress/egress of the occupants and cargo. The door is normally checked against movement in at least one open position with an effort adequate to resist wind gusts and the effect of parking on a grade. Additionally, it has been found useful, and in some countries it is legislated, to constrain an automotive cargo door against rotation with a solid stop at a predetermined angle. This intermediate constraint is usually placed at 90 degrees and is configured so that the door cannot over swing the stop condition by imparting operator generated loads. This solid intermediate stop is in contrast to a check condition, which can be overcome by exceeding a predetermined force. The intermediate stop is then configured with some manual method of defeat so that the cargo door can swing through its remaining range of motion to its full open stop.

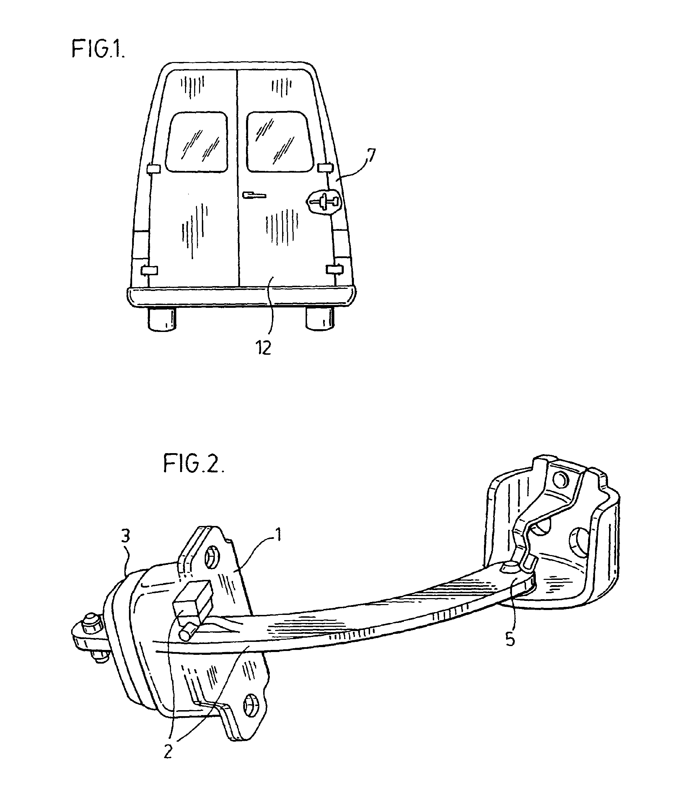

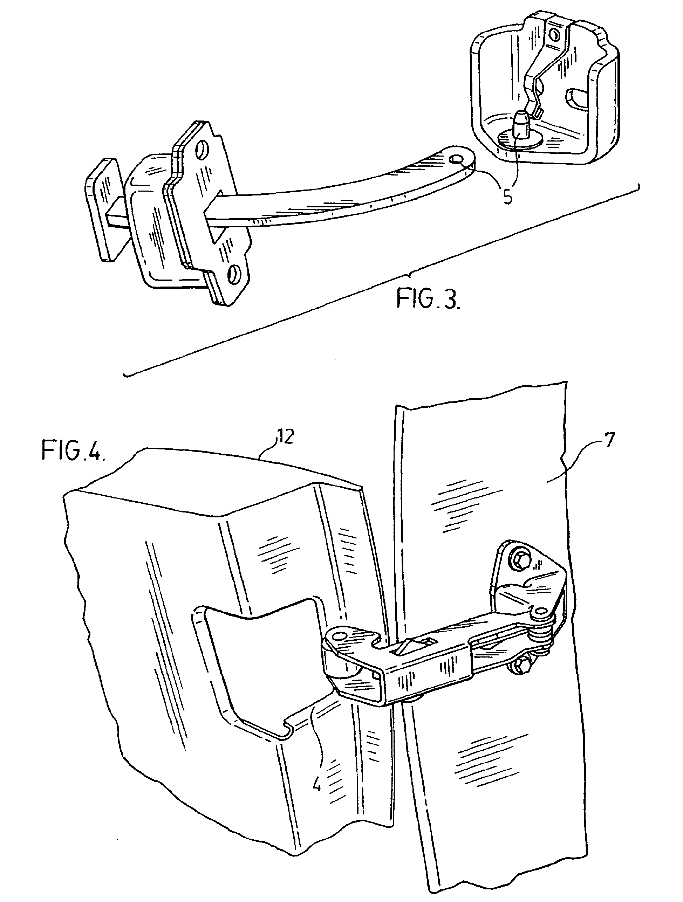

Referring to Figures 1 to 4, the most common form of automotive door check is a mechanical device that resists motion via releasably storing energy in response to forced motion of the system. In cargo van applications the most common configuration of door check is as an autonomous mechanical assembly, separate from the door hinge. This device usually consists of a door or body mounted housing (1) containing some form of energy storage device such as an elastomer spring and an arm (2) that contains a cam profile with detent positions that dictate the check positions and forces. The full open door stop is normally configured to be incorporated into the hinge assembly while the intermediate stop is normally contained in the door check device. This intermediate stop usually consists of a plate (3) attached to the end of the door check arm (2) that constrains it from movement against the housing (1). There is a wide range of intermediate stop defeat methods but the most common is some form of manual disconnect of the arm from the door mounted housing (4) or pivot end (5). This type of manual disconnection is awkward and in many cases relies on the operator to reconnect when the door is being closed. Some systems do facilitate automatic reconnection but still require two hands to operate the defeat, are complex and susceptible to corrosion and wear and can prove dangerous to the operator as they normally contain numerous pinch points.

### SUMMARY OF THE INVENTION

The present invention is targeted at simplifying the operation of defeating and activating an automotive cargo door intermediate stop. It specifically packages the intermediate stop in an autonomous door check assembly and provides a mechanism that facilitates simple one finger disconnection and automatic reconnection.

In a principal aspect of the invention, a door checking and stopping apparatus for an automotive cargo door is provided according to the subject matter of claim 1.

In further aspects of the door checking and stopping apparatus invention:
(a) the resilient member is adapted to be rigidly mounted to the housing creating a single assembly of housing, resilient member and striker;
(b) the resilient member is provided with a tab feature that interfaces with a sliding pin and bushing assembly, adapted to be mounted to the vehicular door structure, facilitating simple actuation of the striker defeat;
(c) the resilient member is provided with an attachment to a cable that is terminated externally to the door facilitating simple actuation of the striker defeat;
(d) the resilient member is manufactured from a high strength spring steel;
(e) the resilient member is manufactured from high strength composite material such as carbon fibre.

### BRIEF DESCRIPTION OF THE DRAWINGS

FIG. 1 is a break away perspective view of a typical automotive cargo door hinge and check installation;
FIG. 2 is a break away perspective view of a typical prior art door check;
FIG. 3 is a perspective view of a typical prior art door check with its arm disconnected at the arm pivot;
FIG. 4 is a perspective view of a typical prior art door check with its arm disconnected from the housing;
FIG. 5 is a perspective view showing the components of the inventive check assembly;
FIG. 6 is a close up view showing the striker and hook feature of the inventive check assembly;
FIG. 7 is a sectional view of the inventive check assembly in the stop-released position;
FIG. 8 is a sectional view of the inventive check assembly in the stop-released position incorporating a tab feature and sliding pin;
FIG. 9 is a sectional view of the inventive check assembly in the stop-released position incorporating a release cable;
FIG. 10 is a sectional view of the inventive check assembly in the door fully open position (180°).

### DETAILED DESCRIPTION OF THE INVENTION

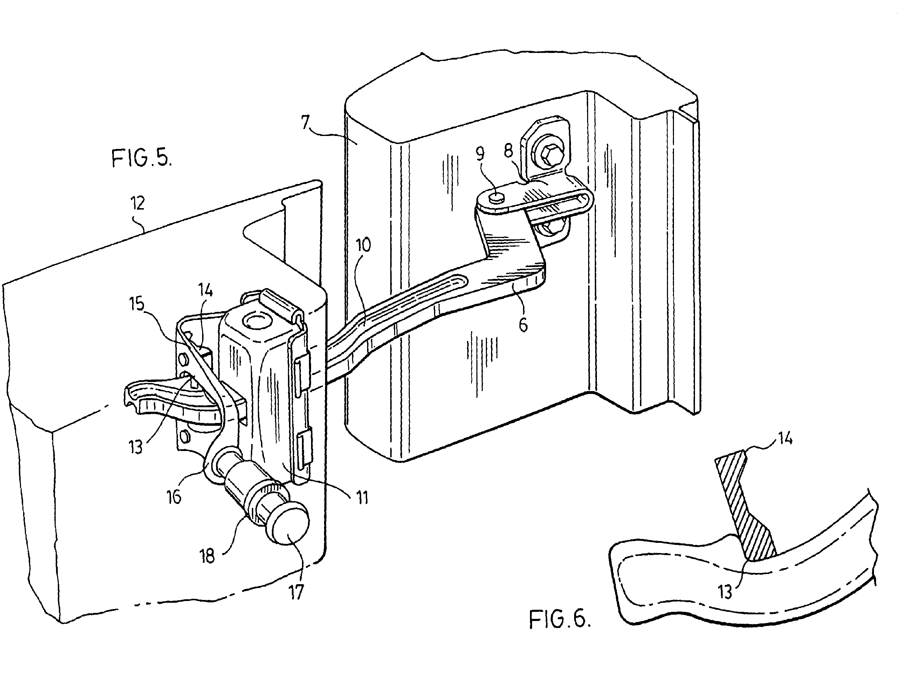

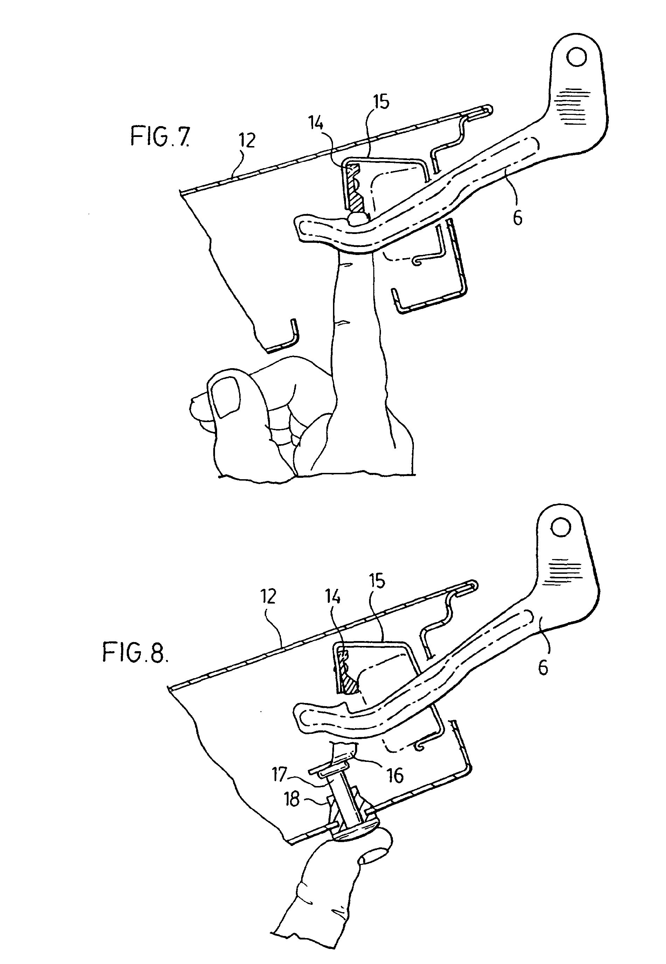

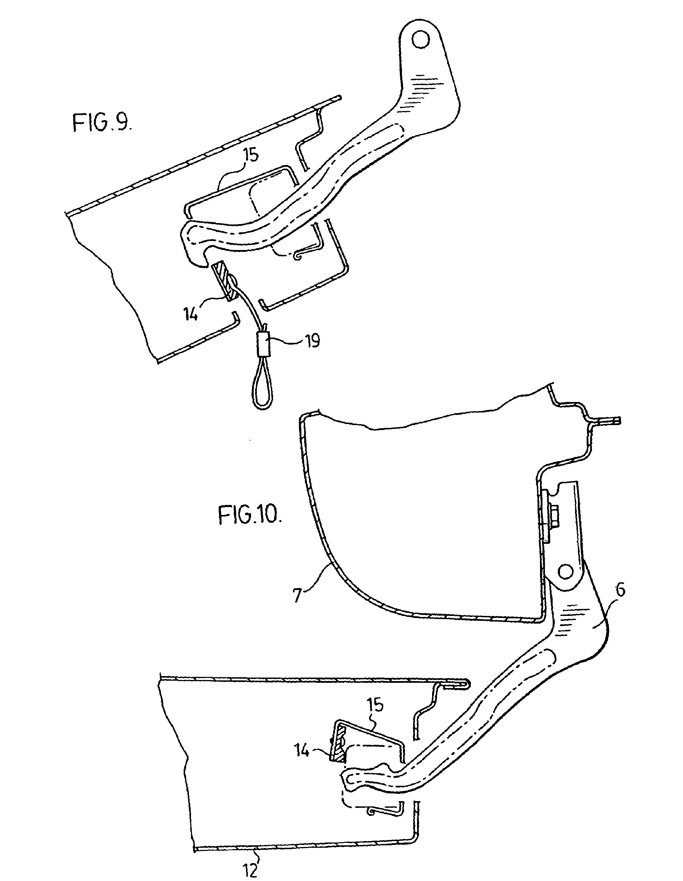

A preferred embodiment will now be described in relation to the drawings of Figures 5 to 10. A door checking arm (6) is permanently pivotally connected to the body structure of a vehicle (7) via a bracket (8) and pivot pin (9). The arm contains a cam profile with detents (10) that dictate the check positions and forces. The arm (6) passes through a housing (11) that is rigidly connected to the vehicular door structure (12). The housing (11) contains an energy storage device consisting of springs, elastomers or similar components known in the prior art and an arm guidance arrangement consisting of balls, rollers, sliders or similar components known in the prior art. The arm (6) contains a hook feature (13) that is configured to interlock with a striker (14) when the door reaches the intermediate stop position. The striker (14) is rigidly mounted to a resilient member (15) that is adapted to constrain the striker (14) from translational motion parallel to the arm (6) centreline but facilitates translational motion perpendicular to the arm (6) centreline. The striker and resilient member are also configured with sufficient structural stiffness and strength to provide adequate resistance to motion between the housing and arm so that the intermediate stop load requirements are met or exceeded. Additionally, the resilient member (15) is geometrically configured to bias the striker into the hook feature so that it automatically engages when the door rotates to the intermediate stop position.

The resilient member (15) can be adapted to be mounted directly to the housing (11) creating a single assembly of housing, resilient member and striker. The striker can be disengaged from the hook feature by manually forcing the resilient member to create translational motion of the striker perpendicular to the arm centreline. An alternative method of striker disengagement is to provide a tab feature (16) incorporated into the resilient member and configured to interface with a sliding pin (17) and bushing (18) assembly, adapted to be mounted to the vehicular door structure (12). The sliding pin (17) is configured to be easily accessible to an operator and when pushed provides adequate force and motion of the resilient member so that the striker translates perpendicular to the arm centreline and disengages from the hook feature. In this way the cargo door intermediate stop feature can be defeated by a single finger actuation of the sliding pin (17) and reengages automatically as the resilient member biases the striker into engagement with the hook feature. Alternatively a cable (19) attached to the striker can also be used to disengage the striker from the hook feature to release the arm from its stop position.

## Claims

1. A door checking and stopping apparatus for an automotive cargo door comprises:
(a) a housing (11) containing an energy storage device and guidance arrangement adapted to be rigidly mounted to a vehicular door;
(b) an arm (6) containing a cam profile with detent positions (10), permanently pivotally connected in its mounted condition to the body structure (7) of the vehicle and configured to interface with the guidance arrangement in the housing (11);
(c) a striker device (14) rigidly mounted to a resilient member (15)
(d) a hook feature (13) incorporated into the free end of the arm (6) that is adapted to interlock with the striker (14)
**characterised in that**
(e) the resilient member (15) is configured to constrain the striker (14) from translational motion parallel to the arm centreline but to facilitate translational motion perpendicular to the arm centreline and **in that** the resilient member (15) biases the striker (14) into engagement with the hook feature (13) when the door (12) reaches its predetermined intermediate stop position, providing adequate motion resistance until it is disengaged by simply forcing the resilient member (15) to create translational motion of the striker perpendicular to the arm centreline so that the striker disengages the hook feature (13).

2. The door checking and stopping apparatus of claim 1, wherein the resilient member (15) is adapted to be rigidly mounted to the housing (11) creating a single assembly of housing (11), resilient member (15) and striker (14).

3. The door checking and stopping apparatus according to any of claims 1 or 2, wherein the resilient member (15) is provided with a tab feature (16) that interfaces with a sliding pin (17) and bushing assembly (18), adapted to be mounted to the vehicular door structure (12), facilitating simple actuation of the striker defeat.

4. The door checking and stopping apparatus according to any of claims 1 or 2, wherein the resilient member (15) is provided with an attachment to a cable (19) that is terminated externally to the door facilitating simple actuation of the striker defeat.

5. The door checking and stopping apparatus according to any of claims 1to 4, wherein the resilient member (15) is manufactured from high strength spring steel.

6. The door checking and stopping apparatus according to any of claims 1 to 4, wherein the resilient member (15) is manufactured from high strength composite material such as carbon fibre.

## Patentansprüche

1. Türarretierungs- und -anschlagmechanismus für eine Kraftfahrzeug-Ladetür, aufweisend:
(a) ein Gehäuse (11), das eine Energiespeichervorrichtungs- und Führungsanordnung enthält und geeignet ist, starr an eine Fahrzeugtür befestigt zu werden;
(b) einen Arm (6), der ein Nockenprofil mit Arretierungsstellungen (10) enthält und der in seinem befestigten Zustand permanent drehbar mit der Karosseriestruktur (7) des Fahrzeugs verbunden ist und derart konfiguriert ist, um mit der Führungsanordnung im Gehäuse (11) zusammenzuwirken;
(c) eine Anschlagvorrichtung (14), die starr an einem federnden Element (15) befestigt ist;
(d) ein Hakenmerkmal (13), das im freien Ende des Arms (6) integriert ist und das geeignet ist, sich mit dem Anschlag zu verzahnen; **dadurch gekennzeichnet, dass**
(e) das federnde Element (15) konfiguriert ist, um den Anschlag (14) aus der Translationsbewegung parallel zur Armmittellinie zu zwingen und um doch die Translationsbewegung rechtwinklig zur Armmittellinie zu erleichtern, und **dadurch**, dass das federnde Element (15) den Anschlag (14) in den Eingriff mit dem Hakerunerkmal (13) vorspannt, wenn die Tür ihre vorbestimmte Zwischenanschlagstellung erreicht, wodurch ein angemessener Bewegungswiderstand gewährleistet wird, bis sie durch einfaches Drücken des federnden Elements (15) gelöst wird, um eine Translationsbewegung des Anschlags rechtwinklig zur Armmittellinie zu erzeugen, wodurch der Arm aus dem Hakenmerkmal (13) gelöst wird.

2. Türarretierungs- und -anschlagmechanismus nach Anspruch 1, wobei das federnde Element (15) geeignet ist, starr an das Gehäuse (11) befestigt zu werden, wodurch aus dem Gehäuse (11), dem federnden Element (15) und dem Anschlag (14) eine einzige Baugruppe erzeugt wird.

3. Türarretierungs- und -anschlagmechanismus nach einem der Ansprüche 1 oder 2, wobei das federnde Element (15) mit einem Laschenmerkmal (16) versehen ist, das mit einer Gleitbolzen-(17) und Buchsenanordnung (18) zusammenwirkt, die geeignet ist, an die Fahrzeugtürstruktur (12) befestigt zu werden, um die einfache Betätigung der Anschlagdeaktivierung zu erleichtern.

4. Türarretierungs- und -anschlagmechanismus nach einem der Ansprüche 1 oder 2, wobei das federnde Element (15) mit einer Befestigung an ein Seil (19) versehen ist, das außerhalb der Tür endet, um die einfache Betätigung der Anschlagdeaktivierung zu erleichtern.

5. Türarretierungs- und -anschlagmechanismus nach einem der Ansprüche 1 bis 4, wobei das federnde Element (15) aus hochfestem Federstahl hergestellt ist.

6. Türarretierungs- und -anschlagmechanismus nach einem der Ansprüche 1 bis 4, wobei das federnde Element (15) aus hochfestem Verbundwerkstoff wie z.B. Carbonfaser hergestellt ist.

## Revendications

1. Appareil de contrôle et d'arrêt de porte pour porte de chargement de marchandises pour automobile comprenant :
(a) un logement (11) contenant un dispositif de stockage d'énergie et un agencement de guidage adaptés pour être montés de façon rigide sur une porte de véhicule ;
(b) un bras (6) contenant un profil de came avec des positions de détente (10), raccordé de façon pivotante en permanence dans sa condition montée sur la structure de carrosserie (7) du véhicule et configuré pour coagir avec l'agencement de guidage dans le logement (11) ;
(c) un dispositif percuteur (14) monté de façon rigide sur un élément élastique (15)
(d) un système à crochet (13) incorporé dans l'extrémité libre du bras (6) qui est adapté pour s'enclencher avec le percuteur (14) ;
(e) l'élément élastique (15) est configuré pour empêcher le percuteur (14) d'effectuer un mouvement de translation parallèle à l'axe du bras mais pour faciliter le mouvement de translation perpendiculaire à l'axe du bras et en ce que l'élément élastique (15) force le percuteur (14) en prise avec le système à crochet (13) lorsque la porte (12) atteint sa position de butée intermédiaire prédéterminée, fournissant une résistance adéquate du mouvement jusqu'à ce qu'il soit dégagé en forçant simplement l'élément élastique (15) à créer le mouvement de translation du percuteur perpendiculaire à l'axe du bras, pour que le percuteur se désengage du système à crochet (13).

2. Appareil de contrôle et d'arrêt de porte selon la revendication 1, dans lequel l'élément élastique (15) est adapté pour être monté de façon rigide sur le logement (11) créant un ensemble unique formé du logement (11), de l'élément élastique (15) et du percuteur (14).

3. Appareil de contrôle et d'arrêt de porte selon l'une quelconque des revendications 1 ou 2, dans lequel l'élément élastique (15) est muni d'un système à languette (16) qui coagit avec une goupille coulissante (17) et un ensemble douille (18), adapté pour être monté sur la structure de porte du véhicule (12), facilitant un actionnement simple de relâchement du percuteur.

4. Appareil de contrôle et d'arrêt de porte selon l'une quelconque des revendications 1 ou 2, dans lequel l'élément élastique (15) est muni d'une fixation à un câble (19) qui est terminé extérieurement à la porte facilitant un actionnement simple du relâchement du percuteur.

5. Appareil de contrôle et d'arrêt de porte selon l'une quelconque des revendications 1 à 4, dans lequel l'élément élastique (15) est fabriqué à partir d'acier à ressort à haute résistance.

6. Appareil de contrôle et d'arrêt de porte selon l'une quelconque des revendications 1 à 4, dans lequel l'élément élastique (15) est fabriqué à partir d'un matériau composite à haute résistance tel que la fibre de carbone.
